# EUROPÄISCHE PATENTSCHRIFT

(11) **EP 4 302 376 B1**
(45) Veröffentlichungstag und Bekanntmachung des Hinweises auf die Patenterteilung: **23.07.2025**
(21) Anmeldenummer: 22723393.9
(22) Anmeldetag: 19.04.2022
(51) Int. Cl.: B60L 15/00, H02J 1/10, B60L 50/60, B60L 53/10, B60L 53/22, B60L 53/51, B60L 53/53, H02J 7/00

(54) **SPEICHERVORRICHTUNG UND VERFAHREN ZUM ÜBERTRAGEN EINES GLEICHSTROMS**
STORAGE DEVICE AND METHOD FOR TRANSMITTING A DIRECT CURRENT
DISPOSITIF DE STOCKAGE ET PROCÉDÉ DE TRANSMISSION D'UN COURANT CONTINU

(30) Priorität: 21.04.2021 DE 102021110110
(43) Veröffentlichungstag der Anmeldung: 10.01.2024
(73) Patentinhaber: BODE, Gerald, 53842 Troisdorf (DE)
(72) Erfinder: BODE, Gerald, 53842 Troisdorf (DE)
(74) Vertreter: Bauer, Dirk
(86) Internationale Anmeldenummer: PCT/EP2022/060206
(87) Internationale Veröffentlichungsnummer: WO 2022/223494

(56) Entgegenhaltungen:
- WO-A1-2011/012174
- CN-A- 108 111 036
- CN-U- 208 112 522
- DE-A1- 102011 003 869
- DE-A1- 102014 213 167
- DE-A1- 102014 215 070
- COLIN OATES: "A methodology for developing 'Chainlink' converters", 13TH EUROPEAN CONFERENCE ON POWER ELECTRONICS AND APPLICATIONS, 2009 : EPE '09 ; 8 - 10 SEPT. 2009, BARCELONA, SPAIN, IEEE, PISCATAWAY, NJ, USA, 8 September 2009 (2009-09-08), pages 1 - 10, XP031541239, ISBN: 978-1-4244-4432-8
- TAJEDDINE KHALILI ET AL: "A Cascaded H-Bridge Multilevel Inverter with SOC Battery Balancing", IJACSA) INTERNATIONAL JOURNAL OF ADVANCED COMPUTER SCIENCE AND APPLICATIONS, vol. 8, 1 January 2017 (2017-01-01), XP055946712, Retrieved from the Internet <URL:https://thesai.org/Downloads/Volume8No12/Paper_45-A_Cascaded_H_Bridge_Multilevel_Inverter.pdf> [retrieved on 20220727]

## Beschreibung

Die Erfindung betrifft zunächst eine Speichervorrichtung mit zweipoligen Speicherelementen für elektrische Ladungen, mit Umrichtergruppen von in Reihe geschalteten Vollbrücken, wobei mit Polen jedes der Speicherelemente jeweils genau eine der Vollbrücken jeder der Umrichtergruppen verbunden ist, und mit einer Steuereinheit zum Bestimmen von Speicherzuständen und Optimieren von Lade- und Entladevorgängen der Speicherelemente über die Vollbrücken anhand des jeweiligen Speicherzustands, und mit je einem zweipoligen Anschluss an jeder der Umrichtergruppen. Die Erfindung betrifft weiterhin ein Verfahren zum Übertragen eines Stroms zwischen einem Aggregat und einer Speichervorrichtung mit zweipoligen Speicherelementen, mit mindestens zwei Umrichtergruppen von jeweils in Reihe geschalteten Vollbrücken, wobei mit jedem der Speicherelemente jeweils genau eine der Vollbrücken jeder der Umrichtergruppen verbunden ist, und mit einer Steuereinheit, die Speicherzustände der Speicherelemente bestimmt und deren Lade- und Entladevorgänge über die Vollbrücken anhand des jeweiligen Speicherzustands optimiert, und mit je einem zweipoligen Anschluss an jeder der Umrichtergruppen.

Eine solche Speichervorrichtung ist aus DE 10 2014 213167 A1 bekannt. CN 208112522 U schlägt vor, aus den Anschlüssen einer Speichervorrichtung mit drei parallel mit Speicherelementen verbundenen Umrichtergruppen einen oder mehrere Verbraucher unmittelbar mit Wechsel- oder Drehstrom zu versorgen.

Im Hintergrund der Erfindung offenbaren DE 10 2011 089 312 A1, DE 10 2012 223 484 A1, DE 10 2014 215 070 A1 und CN 108183622 A Speichervorrichtungen mit mehreren Umrichtergruppen von Vollbrücken, die mit jeweils eigenen Speicherelementen verbunden sind. Aus DE 10 2012 209 179 A1, US 2013/0127251 A1 und DE 10 2017 124 126 A1 sind Speichervorrichtungen mit nur je einer Umrichtergruppe von Vollbrücken bekannt.

Im weiteren Hintergrund der Erfindung sind austauschbare Speichermodule aus je einer Batterie und einer integrierten Steuereinheit beispielsweise für mobile Computer, Kameras oder Drohnen bekannt, wobei die Steuereinheit den Batteriezustand der Batterie überwacht.

### Aufgabe

Der Erfindung liegt die Aufgabe zugrunde, die Gleichstromübertragung zu vereinfachen.

### Lösung

Ausgehend von der bekannten Speichervorrichtung wird nach der Erfindung vorgeschlagen, dass die Steuereinheit miteinander über einen Datenbus vernetzte Steuermodule aufweist, weiter gekennzeichnet durch Speichermodule, wobei die Vollbrücken Teil der Speichermodule sind, mit einem Busanschluss zur Verbindung mit dem Datenbus, mit je genau einem der Speicherelemente, und mit einem der Steuermodule, das dessen Speicherzustand bestimmt und dessen Lade- und Entladevorgänge optimiert, und das je Umrichtergruppe eine Schnittstelle mit vier Steuerleitungen zu einer der Vollbrücken aufweist, wobei die Speichervorrichtung dazu eingerichtet ist, an den Anschlüssen von mindestens zwei der Umrichtergruppen jeweils eine Gleichspannung anzulegen. Die in der bekannten Speichervorrichtung eingesetzten Umrichtergruppen können grundsätzlich jeden gewünschten Verlauf von Strom und Spannung realisieren. Die erfindungsgemäße Speichervorrichtung ist damit zur Aufnahme und Abgabe von Gleichstrom unmittelbar am zweipoligen Anschluss der Umrichtergruppe geeignet. Das Speicherelement kann unterschiedliche Zellen, insbesondere Batteriezellen oder Kondensatoren oder eine Kombination aus beiden enthalten.

Der Speicherzustand beschreibt den Zustand aller Zellen (bei Batteriezellen: "Batteriezustand" oder "battery health") eines Speicherelements und umfasst den Ladezustand ("state of charge", SoC), Prognosewerte möglicher Abgabe- oder Aufnahmeenergiemengen und Grenzwerte von Lade- und Entladeleistungen und - strömen, die die Zellen physisch nicht schädigen und den Verschleiß minimieren. Neben der jeweils aktuell gemessenen Spannung zwischen den Polen und der Temperatur jeder Zelle geht auch die in der Steuereinheit gespeicherte Historie dieser Werte in die Bestimmung des jeweiligen Speicherzustands ein.

Analog zum Speicherzustand der Speicherelemente kann die Steuereinheit auch den jeweiligen Vollbrückenzustand jeder Vollbrücke aus deren Temperatur bestimmen und in die Optimierung einbeziehen. Alternativ können die Vollbrücken einer erfindungsgemäßen Speichervorrichtung derart überdimensioniert sein, dass eine Überlastung nicht auftreten kann und eine Überwachung und Berücksichtigung des Vollbrückenzustands überflüssig ist.

In jeder Vollbrücke (auch: H-Brücke, hier: Vierquadrantensteller) sind vier Leistungsschaltelemente, vorzugsweise vier Transistoren H-förmig nach bekanntem Schema verschaltet. An vier Steuerleitungen der Vollbrücke liegt jeweils eine binäre Steuerspannung an, die den Schaltzustand jeweils genau eines der Leistungsschaltelemente definiert. Auf der Eingangsseite der Vollbrücke sind die Leistungsschaltelemente so mit den Polen des Speicherelements verbunden, dass über die Schaltzustände der Leistungsschaltelemente die Pole auf der Ausgangsseite wahlweise als Anode oder Kathode, kurzgeschlossen oder spannungsfrei geschaltet werden.

In der erfindungsgemäßen Speichervorrichtung weist die Steuereinheit miteinander vernetzte Steuermodule auf, wobei jedes der Steuermodule den Speicherzustand genau eines der Speicherelemente misst und dessen Lade- und Entladevorgänge optimiert. Jedes Steuermodul digitalisiert und speichert nur analog gemessene Werte wie von Spannung und Temperatur der Speicherzellen sowie Temperaturen der Vollbrücken des zugeordneten Speicherelements und bestimmt daraus für dieses Speicherelement die sekundären Kenngrößen wie Speicherzustand und Vollbrückenzustand. In einer solchen modularisierten Speichervorrichtung werden dann nur diese Kenngrößen, die für eine dynamische Leistungsregelung und Energieflusssteuerung erforderlich sind oder explizit angeforderte Datensätze, wie Diagnosedaten an eine übergeordnete Zentralsteuerung übertragen, die anhand der Kenngrößen und Datensätze den jeweils aktuellen Bedarf auf die Vollbrücken verteilt. Die von der Zentralsteuerung zu verarbeitende Datenmenge wird so gegenüber dem bekannten Stand der Technik signifikant reduziert. Alternativ können die Steuermodule den aktuellen Leistungs- und Energiebedarf ohne übergeordnete Zentralsteuerung eigenständig ermitteln und koordinieren. Darüber hinaus vereinfacht die Modularisierung der Steuereinheit den Austausch eines einzelnen beispielsweise defekten Speicherelements zusammen mit dem zugeordneten Steuermodul.

**In** der erfindungsgemäßen Speichervorrichtung sind die Steuermodule untereinander und gegebenen Falls mit einer Zentralsteuerung über einen Datenbus verbunden. Die Bustechnik zur Übertragung von Daten ist allgemein bekannt.

Die erfindungsgemäße Speichervorrichtung wird aus Speichermodulen hergestellt, wobei jedes Speichermodul genau eines der Speicherelemente, eines der Steuermodule zur Bestimmung von dessen Speicherzustand und Optimierung von dessen Lade- und Entladevorgängen und einen Busanschluss zur Verbindung mit dem Datenbus aufweist, wobei das Steuermodul eine Schnittstelle mit vier Steuerleitungen zu einer der Vollbrücken aufweist. **In** einem solchen Speichermodul für eine Speichervorrichtung mit mehreren Umrichtergruppen weist das Steuermodul je Umrichtergruppe eine solche Schnittstelle auf. Das Steuermodul optimiert dann über alle an dem Speicherelement angebrachten Vollbrücken dessen Lade- und Entladevorgänge. Wenn das Steuermodul den Speicherzustand des Speicherelements speichert, kann ein solches Speichermodul in einer erfindungsgemäßen Speichervorrichtung entnommen und ausgewechselt werden.

Wenn die Umrichtergruppe eine fest verbundene Baugruppe der Speichervorrichtung ist, kann ein solches Speichermodul im Betrieb der erfindungsgemäßen Speichervorrichtung unter Last von den zugeordneten Vollbrücken getrennt werden. In der erfindungsgemäßen Speichervorrichtung sind die Vollbrücken Teil des Speichermoduls - die Speicherkapazität einer erfindungsgemäßen Speichervorrichtung kann durch Variation der Anzahl der Speichermodule leicht an den jeweiligen Bedarf angepasst werden. Beim Entnehmen eines solchen Speichermoduls aus einer erfindungsgemäßen Speichervorrichtung oder zum Ergänzen eines weiteren Speichermoduls werden die Vollbrücken der benachbarten Speichermodule elektrisch getrennt. Um die Funktion der Umrichtergruppen aufrecht zu erhalten, kann die Trennstelle mit einem Bypass überbrückt werden.

Vorzugsweise weist eine erfindungsgemäße Speichervorrichtung eine Schalteinrichtung auf, mittels derer die Anschlüsse der Umrichtergruppen verbindbar sind. Eine solche erfindungsgemäße Speichervorrichtung weist eine gesteigerte Speicherkapazität und bei der Aufnahme und Abgabe von Energie eine höhere Leistung auf.

Vorzugsweise weist eine solche erfindungsgemäße Speichervorrichtung einen Wechselstromanschluss auf, mit dem mehrere, insbesondere zwei der Umrichtergruppen mittels der Schalteinrichtung alternativ zu den Anschlüssen verbindbar sind. Eine solche erfindungsgemäße Speichervorrichtung kann für unterschiedliche Energiequellen oder -verbraucher je nach Bedarf Gleich- oder Wechselstrom aufnehmen oder bereitstellen.

Vorzugsweise weist weiterhin eine solche erfindungsgemäße Speichervorrichtung einen Drehstromanschluss auf, mit dem mehrere, insbesondere drei der Umrichtergruppen mittels der Schalteinrichtung alternativ zu den Anschlüssen in Sternschaltung (z.B. für Haushaltsstrom) oder in Dreiecksschaltung (z.B. für den Anlauf einer Drehstrommaschine) verbindbar sind. Eine solche erfindungsgemäße Speichervorrichtung kann für unterschiedliche Energiequellen oder -verbraucher je nach Bedarf Gleich- oder Drehstrom aufnehmen oder bereitstellen.

Vorzugsweise weist eine erfindungsgemäße Speichervorrichtung einen Hilfsenergiespeicher auf, der insbesondere die Zentralsteuerung mit Energie versorgt. In einer solchen erfindungsgemäßen Speichervorrichtung kann der Hilfsenergiespeicher beispielsweise ein Speicherelement oder Hochleistungskondensator sein.

Vorzugsweise weist eine erfindungsgemäße Speichervorrichtung Trennelemente auf, mittels derer jeweils eine der Vollbrücken von dem zugehörigen Speicherelement vorzugsweise einpolig trennbar ist, wobei jedes der Speicherelemente mit höchstens einer der Vollbrücken fest verbunden ist. Wenn unterschiedliche Vollbrücken an demselben Speicherelement von den Umrichtergruppen angesteuert werden, können Potentialunterschiede zwischen den Umrichtergruppen zu Ringströmen führen. Diese Ringströme werden durch Trennen einzelner Vollbrücken mittels der Trennelemente unterbunden.

Grundsätzlich ist es für die Funktion ausreichend, wenn genau alle bis auf eine der Vollbrücken trennbar sind. Diese Vollbrücke kann fest, also ohne Trennelement mit dem jeweiligen Speicherelement verbunden sein. Insbesondere können diese fest verbundenen Vollbrücken einer gemeinsamen Umrichtergruppe zugeordnet sein. Um die Konstruktion zu vereinheitlichen und damit zu vereinfachen, können alternativ alle Vollbrücken mit entsprechenden Trennelementen ausgerüstet sein. Die Ansteuerung dieser Trennelemente im jeweiligen Speichermodul erfolgt durch das Steuermodul. Jedes der Trennelemente ist mit einer Steuerleitung mit dem Steuermodul verbunden.

Vorzugsweise kommt eine erfindungsgemäße Speichervorrichtung zum Einsatz in einem Kraftfahrzeug mit mindestens einem elektrisch betriebenen Motor, in einem elektrischen Hausenergiespeicher mit mindestens einem insbesondere dreiphasigen Niederspannungsanschluss oder in einer Ladestation mit mindestens einem mindestens einphasigen Ladeanschluss für ein elektrisch betreibbares Kraftfahrzeug.

Ausgehend von dem bekannten Verfahren wird nach der Erfindung vorgeschlagen, dass die Steuereinheit miteinander über einen Datenbus vernetzte Steuermodule aufweist, weiter gekennzeichnet durch Speichermodule, wobei die Vollbrücken Teil der Speichermodule sind, mit je genau einem der Speicherelemente (13), und mit einem der Steuermodule, das dessen Speicherzustand bestimmt und dessen Lade- und Entladevorgänge optimiert, und das je Umrichtergruppe über vier Steuerleitungen mit einer der Vollbrücken verbunden ist, wobei der Strom an den Anschlüssen von mindestens zwei der Umrichtergruppen jeweils als Gleichstrom übertragen wird. Das erfindungsgemäße Verfahren kann mit einer erfindungsgemäßen Speichervorrichtung ausgeführt werden und zeichnet sich gleichermaßen durch die vorstehend genannten Vorteile aus.

Vorzugsweise ist in einem erfindungsgemäßen Verfahren das Aggregat eine Photovoltaikanlage, aus der zugleich die Speichervorrichtung und ein Kraftfahrzeug geladen wird. In dem erfindungsgemäßen Verfahren wird dann die mit der Photovoltaikanlage gewonnene Energie ohne Zwischenspeicherung im Wesentlichen verlustfrei in das Kraftfahrzeug übertragen.

### Ausführungsbeispiel

Die Erfindung wird nachfolgend anhand von Ausführungsbeispielen erläutert. Es zeigen
- Fig. 1: ein erfindungsgemäßes Haus, ein erfindungsgemäßes Kraftfahrzeug und eine erfindungsgemäße Ladestation,
- Fig. 2a: schematisch das Laden einer ersten erfindungsgemäßen Speichervorrichtung in dem Haus mit Drehstrom aus einem öffentlichen Niederspannungsnetz
- Fig. 2b: ein Speichermodul der Speichervorrichtung und
- Fig. 2c: die Entnahme von Dreh- oder Wechselstrom aus der ersten Speichervorrichtung,
- Fig. 3a: die Übertragung von Gleichstrom von einer Solaranlage zu der ersten Speichervorrichtung,
- Fig. 3b: ... mit gleichzeitigem Laden des Kraftfahrzeugs,
- Fig. 4: eine zweite erfindungsgemäße Speichervorrichtung in dem Kraftfahrzeug, und
- Fig. 5: eine dritte erfindungsgemäße Speichervorrichtung in der Ladestation.

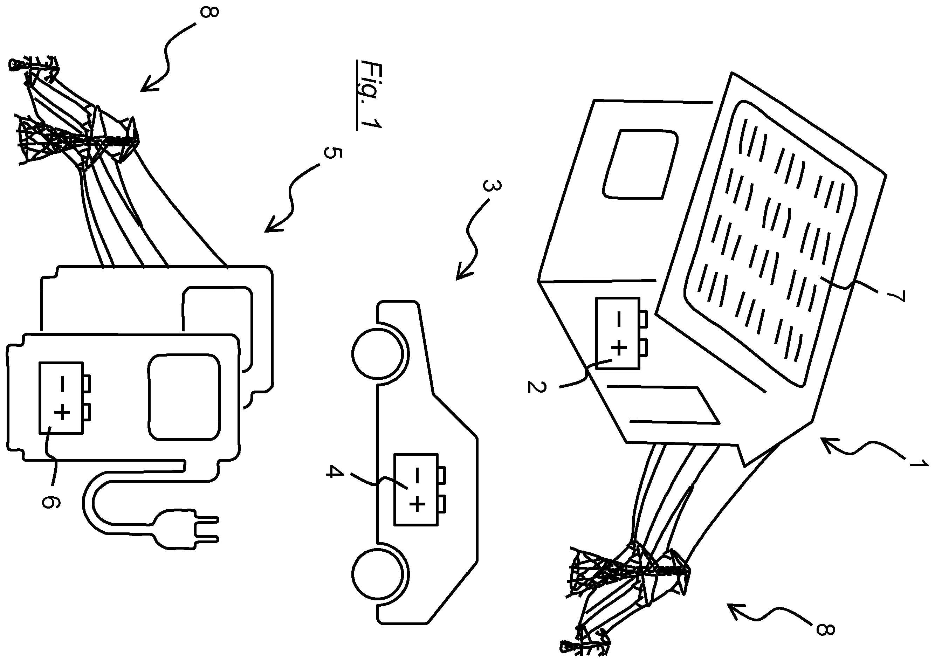

Figur 1 zeigt ein erfindungsgemäßes Haus 1 mit einer ersten erfindungsgemäßen Speichervorrichtung 2, ein erfindungsgemäßes Kraftfahrzeug 3 mit einer zweiten erfindungsgemäßen Speichervorrichtung 4 und eine erfindungsgemäße Ladestation 5 mit einer dritten erfindungsgemäßen Speichervorrichtung 6.

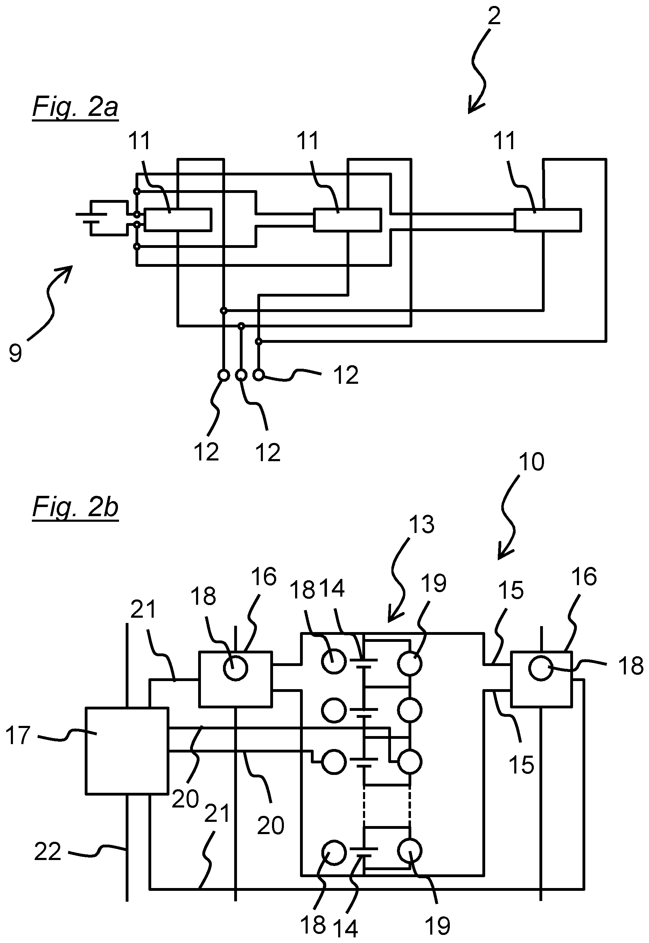

Das Haus 1 weist eine Photovoltaikanlage 7 (20 *kWp,* Usmpp: 700 *V,* Impp: 3x8 A) auf und ist an das öffentliche Niederspannungsnetz 8 (400 *VAC,* 40 *A,* dreiphasig, 50 *Hz*) angeschlossen. Die in Figur 2a schematisch dargestellte erste Speichervorrichtung 2 weist eine Speichergruppe 9 mit 34 Speichermodulen 10, sechs Umrichtergruppen 11 (dargestellt sind vereinfachend nur drei der Umrichtergruppen 11) an der Speichergruppe 9, einen nicht dargestellten Hilfsenergiespeicher (LiFePO₄) und eine gleichfalls nicht dargestellte Zentralsteuerung auf. Zum Laden aus dem Niederspannungsnetz 8 werden die drei Phasen 12 des Niederspannungsnetzes 8 in Dreieck-Schaltung mit den Umrichtergruppen 11 verbunden.

Jedes der in Figur 2b im Detail dargestellten Speichermodule 10 weist ein Speicherelement 13 (25,6 V) aus acht in Reihe geschalteten Batteriezellen 14 (LiIon) mit je 3,2 V, sechs an den Polen 15 des Speicherelements 13 parallel angeschlossene Vollbrücken 16 (dargestellt sind vereinfachend nur zwei der Vollbrücken 16) und ein Steuermodul 17, sowie an jeder Batteriezelle 14 und an den Vollbrücken 16 je einen Temperatursensor 18 und an jeder Batteriezelle 14 einen Spannungssensor 19 auf. Das Steuermodul 17 ist mit Datenleitungen 20 mit den Temperatursensoren 18 und den Spannungssensoren 19 und mit Steuerleitungen 21 mit den Vollbrücken 16 und über einen Datenbus 22 mit der Zentralsteuerung verbunden. Die nicht dargestellte Schnittstelle des Steuermoduls 17 zu den Vollbrücken 16 ist über die Datenleitungen 20 und die Steuerleitungen 21 fest verdrahtet, die Vollbrücken 16 sind in die jeweilige Umrichtergruppe 11 und das Steuermodul 17 an den Datenbus 22 über nicht dargestellte Steckverbindungen eingebunden.

Ein nicht dargestellter Mikrocontroller in dem Steuermodul 17 verarbeitet alle im Speichermodul 10 anfallenden Messwerte von Temperaturen und Spannungen der Batteriezellen 14 und Vollbrücken 16, berechnet mit globalen Messwerten, wie z.B. dem Umrichtergruppen-Strom sekundäre Werte, wie Leistungen und Energiemengen. Einzelwerte und Ergebnisse werden in einem nicht dargestellten Datenspeicher in dem Steuermodul 17 gespeichert und zur Bestimmung der im Speicherelement 13 gespeicherten Energiemenge SoC (state of charge) verwendet. Das Steuermodul 17 stellt den SoC und die aktuellen Temperaturen am Datenbus 22 zur Verfügung, empfängt über den Datenbus 22 Steuerbefehle von der Zentralsteuerung, prüft und bewertet diese z.B. hinsichtlich Zulässigkeit des Schaltzustandes, und steuert entsprechend die Vollbrücken 16.

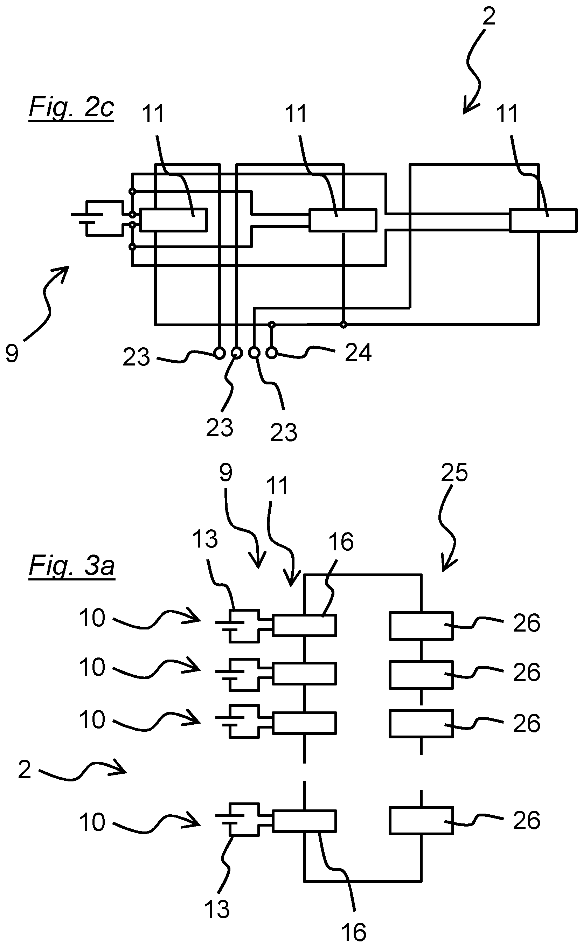

Zum Versorgen von sowohl dreiphasigen Verbrauchern mit 400 *VAC* als auch einphasigen Verbrauchern mit 230 *VAC* im Haus 1 werden wie in Figur 2c dargestellt drei Phasen 23 und der Nullleiter 24 des Hausnetzes (400 *VAC,* 50 *Hz,* dreiphasig) in Sternschaltung mit den Umrichtergruppen 11 verbunden. Die Verbraucher und das Hausnetz sind nicht dargestellt.

Um Ringströme aufgrund von Potentialunterschieden zwischen gleichzeitig mit einem Speicherelement 13 verbundenen Umrichtergruppen 11 zu vermeiden, werden Vollbrücken 16 einzeln mit einem nicht dargestellten Trennelement von dem jeweiligen Speicherelement 13 getrennt, wenn dieses Speicherelement 13 in der jeweiligen Umrichtergruppe 11 nicht verwendet wird. Um den Stromfluss in der Umrichtergruppe 11 aufrecht zu erhalten, überbrückt die Vollbrücke 16 das getrennte Speicherelement 13.

Zum Laden der Batteriezellen 14 der Speicherelemente 13 in Figur 3a aus der Photovoltaikanlage 7 werden drei Strings 25 (Umpp: 28 V, Uoc: 35 V) aus je 25 Photovoltaikmodulen 26 (Pmpp: 260 *W*) der Photovoltaikanlage 7 parallel mit je einer der Umrichtergruppen 11 verbunden. Vereinfachend ist nur eine Verbindung dargestellt. Damit kann jeder der Strings 25 unabhängig in den optimalen Betriebspunkt mit dem MPPT-Verfahren eingeregelt werden. Im optimalen Betriebspunkt liefert jeder der Strings 25 bei Usmpp = 700 *VDC* eine Spitzenleistung von 6,5 *kW.*

Abhängig von der Sonneneinstrahlung, der Temperatur der Photovoltaikmodule und dem State of Charge SoC der Speicherelemente 13 verschiebt sich der optimale Betriebspunkt laufend. Da dem MPPT-Regler einer Umrichtergruppe 11 die Sonneneinstrahlung und die Temperatur der Photovoltaikmodule als Störgrößen unbekannt sind, muss der Betriebspunkt fortlaufend iterativ gesucht werden. Dazu müssen per Modulation der Ausgangsspannung Vsout der Umrichtergruppen 11 mehrere Lastpunkte oberhalb und unterhalb des aktuellen Lastpunktes angefahren und die dazugehörige Gesamtleistung von der Zentralsteuerung errechnet werden. Die der höchsten Leistung zugeordnete Ausgangsspannung wird anschließend als neuer optimaler Betriebspunkt weiter verwendet. Die Schaltfolge der Speichermodule 10 und Regelung von Vsout ist auf eine kontinuierliche Strombelastung der Speichermodule 10 und Ausgleich der Energieflüsse optimiert.

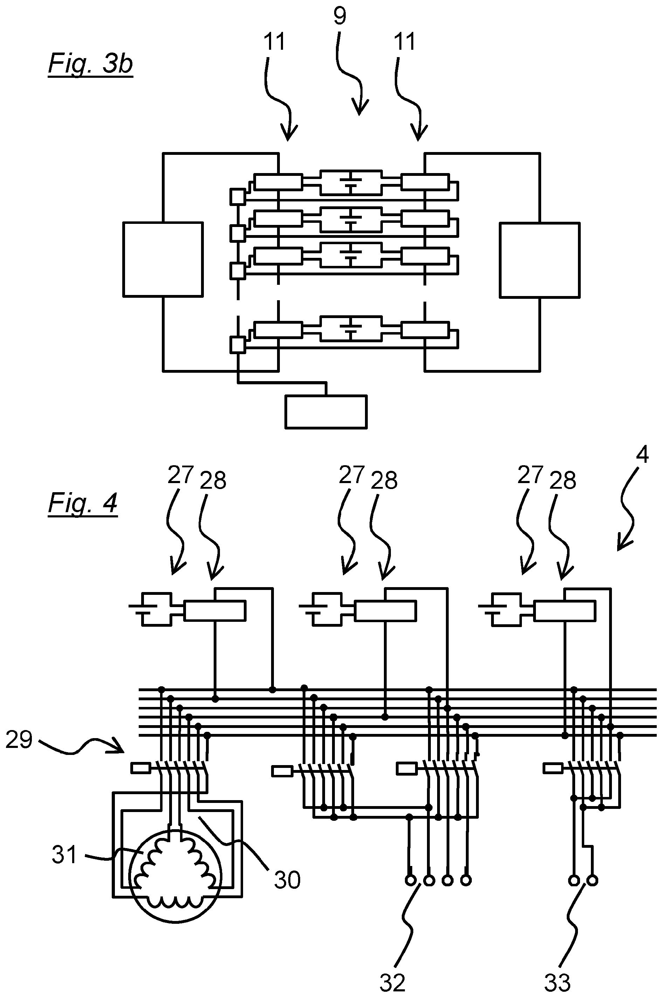

Figur 3b zeigt, wie während der Ladung der Speichervorrichtung 2 aus der Photovoltaikanlage 7 zugleich das Kraftfahrzeug 3 geladen wird: Dazu sind alle Umrichtergruppen 11 an dieselben Speicherelemente 13 angebunden. Die stark schwankende Spannung der Photovoltaikanlage 7 von 0 bis 875 *V* wird im jeweiligen MPPT-Leistungsoptimum durch drei der Umrichtergruppen 11 eingeregelt und die Energie bei 700 *VDC* und 3x8 A je Umrichtergruppe 11 für Bruchteile von Sekunden in die Speicherelemente 13 gespeichert. Dazu werden bis zu 28 der Speicherelemente 13 zuschaltet. Gleichzeitig entnehmen drei andere der Umrichtergruppen 11 diese Energie in Form von 400 *VDC* und 41 *A.* Dazu schaltet dieser sechzehn der Speicherelemente 13 zu.

Die in Figur 4 im Detail dargestellte zweite erfindungsgemäße Speichervorrichtung 4 in dem Kraftfahrzeug 3 weist wiederum drei Speichergruppen 27 mit je einer angeschlossenen Umrichtergruppe 28 und einem nicht dargestellten Steuermodul sowie eine Schalteinrichtung 29 zum Umschalten der Umrichtergruppen 28 zwischen einem Drehstromanschluss 30 für den Motor 31 (690 *VAC,* dreipolig, 0-100 *Hz,* 100 *kW*) des Kraftfahrzeugs 3, einem weiteren Wechselstromanschluss 32 zum ein- oder dreiphasigen Laden und einem Gleichstromanschluss 33 auf.

Die Vollbrücken der Umrichtergruppen 28 sind als Baugruppe fest verbunden, die Speichermodule der Speichergruppen 27 bestehen jeweils nur aus einem Speicherelement und einem Steuermodul mit Schnittstellen zu den jeweiligen Vollbrücken. Die Vollbrücken, die Speichermodule und deren Einzelheiten sind nicht im Detail dargestellt.

Im Fahrbetrieb des Kraftfahrzeugs 3 wird nur der Motor 31 zugeschaltet. Damit versorgt jede Umrichtergruppe 28 genau eine Motorwicklung. Die Strangspannung des Motors 31 beträgt 690 *V,* um die Ströme signifikant auf unter 100 *A* zu minimieren. Die dreiphasige Wechselspannung wird in Spannung und Frequenz in beiden Energieflussrichtungen synthetisiert.

Im DC-Ladebetrieb über den Gleichstromanschluss 33 erlaubt das Kraftfahrzeug 3 eine Eingangsspannung von 30 *V* bis 870 *V* bei 0 bis 500 A Ladestrom und verteilt die Energie auf die einzelnen Speicherelemente 13 intern selbst. Damit ergibt sich eine maximale Ladeleistung von ca. 350 *kW.*

Im DC-Netzspeicherbetrieb über den Gleichstromanschluss 33 nach CSS Integration Level 3 - V2H oder höher kann eine frei wählbare Spannung und Leistung aus den Kraftfahrzeug 3 entnommen oder gespeichert werden. In dieser Betriebsart wird die Verbindung zur ersten erfindungsgemäßen Speichervorrichtung 2 hergestellt.

Über den Gleichstromanschluss 33 ist eine direkte Kopplung zweier Kraftahrzeuge 3 zum direkten Energieaustausch auf DC-Basis möglich. Jedes Kraftfahrzeug 3 wählt dabei die Speicherelemente auf Basis von verhandelter Ladespannung und -strom selbst aus.

Zum Laden an einer haushaltsüblichen Schutzkontaktsteckdose über den Wechselstromanschluss 32 werden alle Umrichtergruppen 28 mit der Spannung von 230 *VAC* beaufschlagt. Die Eingangsspannung kann zwischen 30 und 870 *V* bei 0-100 *Hz* liegen.

Zum Laden an einer handelsüblichen Drehstromsteckdose oder direkt mit dem CCS-Standard kompatiblen Typ2-Stecker über den Wechselstromanschluss 32 wird jede der drei Umrichtergruppen 28 im Stern mit 230 *V* des externen Netzes beaufschlagt. Bei 400 *VAC* Außenleiterspannung wird die max. Ladeleistung zum jetzigen Zeitpunkt alleine durch den gültigen CCS-Standard auf 43 *kW* bei 63 *A* und 400 *VAC* begrenzt.

Ein nicht dargestellter Adapter erlaubt den Inselbetrieb von ein- oder dreiphasigen Verbrauchern über den Wechselstromanschluss 32 direkt aus den Kraftfahrzeug 3. Der Adapter wird per CCS-Stecker und zugehörigen Kabel mit dem Kraftfahrzeug 3 verbunden.

Ein nicht dargestellter Adapter erlaubt über den Gleichstromanschluss 33 den direkten Anschluss einer Photovoltaikanlage 7 an das Kraftahrzeug 3, ohne Umweg über die erste erfindungsgemäße Speichervorrichtung 2 oder externe Stromrichter.

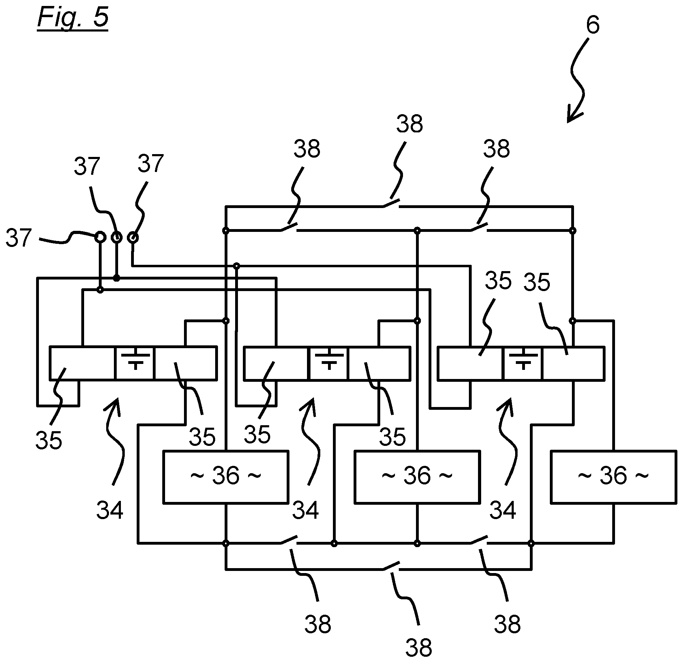

Die in Figur 5 im Detail schematisch dargestellte Speichervorrichtung 6 weist drei Speichergruppen 34 mit je zwei Umrichtergruppen 35 und drei Ladeanschlüsse 36 auf und ist wiederum an das öffentliche Niederspannungsnetz 8 angeschlossen. Die Netzanschlussleistung liegt zwischen 43 *kW* und 150 *kW,* abhängig von der Kapazität des Energieversorgungsnetzes. Die Eingangsspannung der Ladestation 5 kann zwischen 90 und 690 *VAC* bei 15 bis 60 *Hz* liegen, die mögliche Ladeleistung für das Kraftfahrzeug 3 beträgt unabhängig von den Netzanschlussparametern in jedem Fall bis zu 350 *kW,* bei einer Ladespannung von bis zu 800 *VDC.* Damit erlaubt die Ladestation 5 eine wesentlich höhere Ladeleistung für das Kraftfahrzeug 3 von bis zu 350 *kW,* als das Niederspannungsnetz 8 mit minimal 43 *kW* zur Verfügung stellt.

Die drei Phasen 37 des Niederspannungsnetzes 8 werden mit drei der Umrichtergruppen 35 verschaltet. Die Energie wird anteilig in die Speichergruppen 34 gespeichert. Drei weitere Umrichtergruppen 35 entnehmen gleichzeitig die Energie aus den Speichergruppen 34 und erzeugen daraus eine stufenlose Gleichspannung, die bei vollem Nennstrom von 500 *A* von 30 bis 870 *V* geregelt werden kann.

Zur optimalen Ausnutzung der installierten Leistung des Gesamtsystems im typischen Anwendungsfall und zur Reduzierung der Verlustleistungen wird auch der DC-Ausgangsstrom von 500 *A* auf die Speichergruppen 34 mit je 170 *A* über Schaltelemente 38 verteilt. Jede Speichergruppe 34 versorgt einen unabhängigen CCS-Ladeanschluss 36, sodass maximal drei Kraftfahrzeuge 3 gleichzeitig mit jeweils bis zu 68/135 *kW* bei 400/800 *VDC* geladen werden können.

Ist nur ein CCS-Anschluss belegt, kann je nach Leistungsbedarf des Kraftfahrzeugs 3 die Leistung der beiden anderen Speichergruppen 34 parallel über die Schaltelemente 38 zugeschaltet und so ein einzelnes Kraftfahrzeug 3 mit bis zu 200/350 *kW* geladen werden. Bei zwei angeschlossenen Kraftfahrzeugen 3 kann eines mit bis zu 135/270 *kW* und das andere mit bis zu 68/135 *kW* geladen werden. Die Parallelschaltung der Speichergruppen 34 erfolgt dabei über die Schaltelemente 38 dynamisch während des Ladevorgangs, ohne dass der Nutzer den Ladevorgang unterbrechen muss.

Eine nicht dargestellte weitere Speichervorrichtung entspricht im Wesentlichen der dritten Speichervorrichtung 6. Anstelle von Batteriezellen kommen allerdings Kondensatoren als Speicherelemente zum Einsatz. In dieser Speichervorrichtung entspricht abweichend die maximale Ladeleistung der Netzanschlussleistung (hier: 350 *kW*). Gegenüber der dritten Speichervorrichtung 6 zeichnen diese Speichervorrichtungen ein reduziertes Gesamtgewicht und deutlich kleinere Gehäuseabmessen bei gleichzeitig signifikant reduzierten Anschaffungs- und Betriebskosten aus. Es entfällt die Möglichkeit, über längere Zeiträume (z.B. 40 Minuten) mehr Energie (z.B. 100 *kWh*) an ein Kraftfahrzeug 3 abzugeben, als ein schwaches Niederspannungsnetz bei einer Anschlussleistung von z.B. 43 *kW* liefern kann.

In den Figuren sind
- 1: Haus
- 2: Speichervorrichtung
- 3: Kraftfahrzeug
- 4: Speichervorrichtung
- 5: Ladestation
- 6: Speichervorrichtung
- 7: Photovoltaikanlage
- 8: Niederspannungsnetz
- 9: Speichergruppe
- 10: Speichermodul
- 11: Umrichtergruppe
- 12: Phase
- 13: Speicherelement
- 14: Batteriezelle
- 15: Pol
- 16: Vollbrücke
- 17: Steuermodul
- 18: Temperatursensor
- 19: Spannungssensor
- 20: Datenleitung
- 21: Steuerleitung
- 22: Datenbus
- 23: Phase
- 24: Nullleiter
- 25: String
- 26: Photovoltaikmodul
- 27: Speichergruppe
- 28: Umrichtergruppe
- 29: Schalteinrichtung
- 30: Drehstromanschluss
- 31: Motor
- 32: Wechselstromanschluss
- 33: Gleichstromanschluss
- 34: Speichergruppe
- 35: Umrichtergruppe
- 36: Ladeanschluss
- 37: Phase
- 38: Schaltelement

## Patentansprüche

1. Speichervorrichtung (2, 4) mit zweipoligen Speicherelementen (13) für elektrische Ladungen, mit Umrichtergruppen (11, 28, 35) von in Reihe geschalteten Vollbrücken (16), wobei mit Polen (15) jedes der Speicherelemente (13) jeweils genau eine der Vollbrücken (16) jeder der Umrichtergruppen (11, 28, 35) verbunden ist, und mit einer Steuereinheit zum Bestimmen von Speicherzuständen und Optimieren von Lade- und Entladevorgängen der Speicherelemente (13) über die Vollbrücken (16) anhand des jeweiligen Speicherzustands, und mit je einem zweipoligen Anschluss an jeder der Umrichtergruppen (11, 28, 35), ***dadurch gekennzeichnet, dass*** die Steuereinheit miteinander über einen Datenbus (22) vernetzte Steuermodule (17) aufweist, weiter **gekennzeichnet durch** Speichermodule (10), wobei die Vollbrücken (16) Teil der Speichermodule (10) sind, mit einem Busanschluss zur Verbindung mit dem Datenbus (22), mit je genau einem der Speicherelemente (13), und mit einem der Steuermodule (17), das dessen Speicherzustand bestimmt und dessen Lade- und Entladevorgänge optimiert, und das je Umrichtergruppe (11, 28, 35) eine Schnittstelle mit vier Steuerleitungen zu einer der Vollbrücken (16) aufweist, wobei die Speichervorrichtung (2, 4) dazu eingerichtet ist, an den Anschlüssen von mindestens zwei der Umrichtergruppen (11, 28, 35) jeweils eine Gleichspannung anzulegen.

2. Speichervorrichtung (2, 4) nach dem vorgenannten Anspruch,
***gekennzeichnet durch*** eine Schalteinrichtung (29), mittels derer die Anschlüsse der Umrichtergruppen (11, 28, 35) verbindbar sind.

3. Speichervorrichtung (2, 4) nach dem vorgenannten Anspruch,
***gekennzeichnet durch*** einen Wechselstromanschluss (32), mit dem zwei der Umrichtergruppen (11, 28, 35) mittels der Schalteinrichtung (29) alternativ zu den Anschlüssen verbindbar sind.

4. Speichervorrichtung (2, 4) nach einem der Ansprüche 2 und 3,
***gekennzeichnet durch*** einen Drehstromanschluss (30), mit dem drei der Umrichtergruppen (11, 28, 35) mittels der Schalteinrichtung (29) alternativ zu den Anschlüssen in Sternschaltung oder in Dreiecksschaltung verbindbar sind.

5. Speichervorrichtung (2, 4) nach einem der vorgenannten Ansprüche,
***gekennzeichnet durch*** einen Hilfsenergiespeicher.

6. Speichervorrichtung (2, 4) nach einem der vorgenannten Ansprüche,
***gekennzeichnet durch*** Trennelemente, mittels derer jeweils eine der Vollbrücken (16) von dem zugehörigen Speicherelement (13) vorzugsweise einpolig trennbar ist, wobei jedes der Speicherelemente (13) mit höchstens einer der Vollbrücken (16) fest verbunden ist.

7. Kraftfahrzeug (3) mit mindestens einem elektrisch betriebenen Motor (31), elektrischer Hausenergiespeicher mit mindestens einem dreiphasigen Niederspannungsanschluss oder Ladestation (5) mit mindestens einem mindestens einphasigen Ladeanschluss (36) für ein elektrisch betreibbares Kraftfahrzeug (3), ***gekennzeichnet durch*** eine Speichervorrichtung (2, 4) nach einem der Ansprüche 3 oder 4.

8. Verfahren zum Übertragen eines Stroms zwischen einem Aggregat und einer Speichervorrichtung (2, 4) mit zweipoligen Speicherelementen (13), mit Umrichtergruppen (11, 28, 35) von jeweils in Reihe geschalteten Vollbrücken (16), wobei mit Polen (15) jedes der Speicherelemente (13) jeweils genau eine der Vollbrücken (16) jeder der
Umrichtergruppen (11, 28, 35) verbunden ist, und mit einer Steuereinheit, die Speicherzustände der Speicherelemente (13) bestimmt und deren Lade- und Entladevorgänge über die Vollbrücken (16) anhand des jeweiligen Speicherzustands optimiert, und mit je einem zweipoligen Anschluss an jeder der Umrichtergruppen (11, 28, 35), ***dadurch gekennzeichnet, dass*** die Steuereinheit miteinander über einen Datenbus (22) vernetzte Steuermodule (17) aufweist, weiter **gekennzeichnet durch** Speichermodule (10), wobei die Vollbrücken (16) Teil der Speichermodule (10) sind, mit je genau einem der Speicherelemente (13), und mit einem der Steuermodule (17), das dessen Speicherzustand bestimmt und dessen Lade- und Entladevorgänge optimiert, und das je Umrichtergruppe (11, 28, 35) über vier Steuerleitungen mit einer der Vollbrücken (16) verbunden ist, wobei der Strom an den Anschlüssen von mindestens zwei der Umrichtergruppen (11, 28, 35) jeweils als Gleichstrom übertragen wird.

9. Verfahren nach dem vorgenannten Anspruch, ***dadurch gekennzeichnet, dass*** das Aggregat eine Photovoltaikanlage (7) ist, aus der zugleich die Speichervorrichtung (2) und ein Kraftfahrzeug (3) geladen wird.

## Claims

1. A storage device (2, 4)
with two pole storage elements (13) for electrical charges,
with inverter groups (11, 28, 35) including full bridges (16) connected in series, wherein exactly one of the full bridges (16) of each of the inverter groups (11, 28, 35) is connected with poles (15) of each of the storage elements (13),
with a control unit configured to determine storage conditions and optimize charge and discharge processes of the storage elements (13) through the full bridges (16) based on a respective storage condition, and
with a respective two-pole connection at each of the inverter groups (11, 28, 35),
**characterized in that** the control unit includes control modules (17) connected with one another by a data bus (22),
further **characterized by** storage modules (10), wherein the full bridges (16) form part of the storage modules (10),
each of the storage modules with a bus connection configured to connect with the data bus (22), further with exactly one of the storage elements (13), and further with one of the control modules (17) that determines its storage condition and optimizes its charging and discharging processes and that includes an interface with four control conductors to one of the full bridges (16) for each of the inverter groups (11, 28, 35),
wherein the storage device (2, 4) is configured to apply a DC voltage at the connections of at least two of the inverter groups (11, 28, 35).

2. The storage device (2, 4) according to the preceding claim, **characterized by** a switching device (29) by which the connections of the inverter groups (11, 28, 35) are connectable.

3. The storage device (2, 4) according to the preceding claim, **characterized by** an AC connection (32) connectable with two of the inverter groups (11, 28, 35) by the switching device (29) alternatively to the connections.

4. The storage device (2, 4) according to one of the claims 2 and 3, **characterized by** a three-phase connection (30) connectable with three of the inverter groups (11, 28, 35) by the switching device (29) as an alternative to the connection in a star circuit or a delta circuit.

5. The storage device (2, 4) according to one of the preceding claims, **characterized by** an auxiliary energy storage device.

6. The storage device (2, 4) according to one of the preceding claims, **characterized by** separation elements configured to separate one respective full bridge (16) from the associated storage element (13), advantageously by one pole separation, wherein each of the storage elements (13) is hard wired with one of the full bridges at the most.

7. A motor vehicle (3) including at least one electrically operated motor (31); an electrical domestic energy storage including at least one three phase low voltage connection or charging station (5) including an at least one at least one phase charging connection (36) for an electrically operatable motor vehicle (3) **characterized by** a storage device (2, 4) according to one of the claims 3 or 4.

8. A method for transmitting power between a power unit and a storage device (2, 4), the storage device comprising:
two pole storage elements (13),
inverter groups (11, 28, 35) including full bridges (16) respectively connected in series, wherein exactly one of the full bridges (16) of each of the inverter groups (11, 28, 35) is connected with poles (15) of each of the storage elements (13),
a control unit that determines storage conditions and optimizes charging and discharging processes of the storage elements (13) through the full bridges (16) based on a respective storage condition, and
a respective two-pole connection at each of the inverter groups (11, 28, 35),
**characterized in that** the control unit includes control modules (17) connected by a data bus (22),
further **characterized by** storage modules (10), wherein the full bridges (16) are included in the storage modules (10), the storage modules (10) respectively including exactly one of the storage elements (13) and one of the control modules (17) that determines a storage condition of the exactly one of the storage elements (13) and that optimizes the charging and discharging processes of the exactly one of the storage elements (13) and that is connected by four control conductors with one of the full bridges (16) for each of the inverter groups (11, 28, 35), wherein power is transmitted as direct current at connections of at least two of the inverter groups (11, 28, 35).

9. The method according to the preceding claim, **characterized in that** the power unit is a photovoltaic plant (7) that simultaneously charges the storage device (2) and a motor vehicle (3).

## Revendications

1. Dispositif de stockage (2, 4) comprenant des éléments de stockage bipolaires (13) pour charges électriques, des groupes de convertisseurs (11, 28, 35) constitués de ponts complets (16) connectés en série, dans lequel chaque élément de stockage (13) est respectivement connecté à un seul des ponts complets (16) de chaque groupe de convertisseurs (11, 28, 35) aux pôles (15) et comportant une unité de commande pour déterminer les états de stockage et optimiser les processus de charge et de décharge des éléments de stockage (13) via les ponts complets (16) en fonction de l'état de stockage respectif et comportant une connexion bipolaire sur chacun des groupes de convertisseurs (11, 28, 35), **caractérisé en ce que** l'unité de commande présente des modules de commande (17) interconnectés via un bus de données (22), **caractérisé en outre par** des modules de stockage (10), dans lequel les ponts complets (16) font partie des modules de stockage (10), comportant une connexion de bus pour la connexion au bus de données (22) permettant de connecter un seul élément de stockage (13) et un des modules de commande (17), qui détermine son état de stockage et optimise ses processus de charge et de décharge et qui dispose d'une interface avec quatre lignes de commande vers un des ponts complets (16) pour chaque groupe de convertisseurs (11, 28, 35), dans lequel le dispositif de stockage (2, 4) est configuré pour appliquer une tension continue aux bornes d'au moins deux des groupes de convertisseurs (11, 28, 35).

2. Dispositif de stockage (2, 4) selon la revendication précédente, **caractérisé par** un dispositif de commutation (29), au moyen duquel les bornes des groupes de convertisseurs (11, 28, 35) peuvent être connectées.

3. Dispositif de stockage (2, 4) selon la revendication précédente, **caractérisé par** une connexion à courant alternatif (32), au moyen de laquelle deux des groupes de convertisseurs (11, 28, 35) peuvent être connectés alternativement aux bornes au moyen du dispositif de commutation (29)

4. Dispositif de stockage (2, 4) selon une des revendications 2 et 3, **caractérisé par** une connexion triphasée (30), à laquelle trois des groupes de convertisseurs (11, 28, 35) peuvent être connectés aux bornes par le dispositif de commutation (29), alternativement en étoile ou en triangle.

5. Dispositif de stockage (2, 4) selon une des revendications précédentes, **caractérisé par** un dispositif de stockage d'énergie auxiliaire.

6. Dispositif de stockage (2, 4) selon une des revendications précédentes, **caractérisé par** des éléments de séparation, au moyen desquels respectivement un des ponts complets (16) peut être séparé de l'élément de stockage associé (13), de préférence unipolaire, dans lequel chaque élément de stockage (13) est connecté fixement à au plus un des ponts complets (16).

7. Véhicule automobile (3) équipé d'au moins un moteur électrique (31), d'un dispositif de stockage d'énergie domestique équipé d'au moins une connexion basse tension triphasée ou d'une borne de recharge (5) équipée d'au moins une connexion de charge monophasée (36) pour un véhicule automobile électrique (3), **caractérisé par** un dispositif de stockage (2, 4) selon une des revendications 3 ou 4.

8. Procédé de transmission d'un courant entre un groupe et un dispositif de stockage (2, 4) comportant des éléments de stockage bipolaires (13), des groupes de convertisseurs (11, 28, 35) constitués de ponts complets (16) connectés en série, dans lequel chaque élément de stockage (13) est connecté à un des ponts complets (16) de chaque groupe de convertisseurs (11, 28, 35) aux pôles (15) et comportant une unité de commande qui détermine les états de stockage des éléments de stockage (13) et commande leurs processus de charge et de décharge via les ponts complets (16) en fonction de l'état de stockage respectif et une connexion bipolaire à chacun des groupes de convertisseurs (11, 28, 35), **caractérisé en ce que** l'unité de commande présente des modules de commande (17) interconnectés via un bus de données (22), **caractérisé en outre par** des modules de stockage (10), dans lequel les ponts complets (16) font partie des modules de stockage (10), comportant une connexion de bus pour la connexion au bus de données (22) permettant de connecter un seul élément de stockage (13) et un des modules de commande (17), qui détermine son état de stockage et optimise ses processus de charge et de décharge et que chaque groupe de convertisseurs (11, 28, 35) est connecté via quatre lignes de commande à un des ponts complets (16), dans lequel dans lequel le courant est transmis respectivement comme un courant continu aux bornes d'au moins deux des groupes de convertisseurs (11, 28, 35).

9. Procédé selon la revendication précédente, **caractérisé en ce que** le groupe est une installation photovoltaïque (7), à partir de laquelle le dispositif de stockage (2) et un véhicule automobile (3) sont chargés simultanément.
